Europäisches Patentamt

European Patent Office

Office européen des brevets

(19)

(11) Publication number: **0 039 186**
**A1**

# EUROPEAN PATENT APPLICATION

(12)

(21) Application number: **81301710.0**

(22) Date of filing: **16.04.81**

(51) Int. Cl.³: **A 01 G 27/00**

(30) Priority: **24.04.80 AR 280806**

(43) Date of publication of application:
**04.11.81 Bulletin 81/44**

(84) Designated Contracting States:
**AT BE CH DE FR GB IT LI LU NL SE**

(71) Applicant: **De Castro, German**
**Carhué 1643**
**1440 Buenos Aires(AR)**

(72) Inventor: **De Castro, German**
**Carhué 1643**
**1440 Buenos Aires(AR)**

(74) Representative: **Harrison, David Christopher et al,**
**MEWBURN ELLIS & CO 70 & 72 Chancery Lane**
**London WC2A 1AD(GB)**

(54) **Plant pot assembly.**

(57) A plant pot assembly has a plant-carrying pot (2) which sits in a water container (1). The pot (2) is divided by a partition (3) into an upper section (a) which carries plants and bedding material in use and a lower sector (b). In use the partition (3) is above the level (c) of water (12) in the container (1). Water reaches the roots (9) of the plants by capillary action in the pot (2). A screw cap (7) holds the pot (2) against a sealing ring (5) at the rim (6) of the container (1), sealing the container (1). The partition (3) has a grid structure allowing excess water in the upper section (a) to drain out.

The assembly permits the roots of a plant to be kept moist without attention over a long period, without over-watering initially. It has particular application to the keeping of the miniature trees known as bonsai.

./...

EP 0 039 186 A1

PLANT POT ASSEMBLY

This invention relates to a novel plant pot assembly with an automatic moistening system.

It is well known that flowerpots generally containing ornamental plants, whether grown for their flowers or for their ornamental structure, are usually made of refractories, ceramics, cemented hydrated limes, and such like, and are provided at their bottom area with one or more perforations adapted to enable the drainage of excess water after watering the plant, with a view to protecting the roots against decay.

This produces dirt around the flowerpot, because as the excess water is drained off, it carries along part of the soil contained in the flowerpot.

Another disadvantage of prior art flowerpots is that, frequently, persons walking along the street are splashed when flowerpots located on balconies of highrise housing units are being watered.

Furthermore, as already explained, such flowerpots are made of brittle materials and consequently are easily broken accidentally or by careless handling.

Another frequent phenomenon is that of people complaining that they have lost a plant they were particularly fond of or a very costly plant because the person in charge of the plant forgot to water it or because it was left unattended while the owner was on holiday or on a business trip.

The latter inconvenience is much more in evidence, for instance, among persons tending miniature trees, known as "bonsai". The value of these plants is extremely high because decades of work is needed to obtain them and also because without exception such plants require continuous attention and have to be watered twice a day.

The present invention has, as a result of multiple experimentations and studies, solved in a practical and economical manner _inter_ _alia_ the above specified problems and many others by offering a practical, modern and stylish gadget, suited to the taste or necessities of the consumer, the inventive concept of which is based on simply making use, with objectivity and intelligence, of the phenomenon of capillarity.

The present plant pot assembly is characterized essentially in comprising a container filled with water up to a fixed level, which is closed by the placing into it of a plant pot having a horizontal, essentially grid-like partition intended to be above the water level of the container, and capillary means for drawing water into the upper sector of the pot.

In order to achieve a leakproof seal, the pot should have an outwardly turned lip to be seated on the rim of the container, and a screw top should be threaded onto the body of the container in order to position the lip and a sealing ring against the rim of said container.

The horizontal partition provided on the actual flowerpot divides the same into two sectors: an upper and a lower sector.

The upper sector contains the soil in which the roots of the plant develop and the lower sector extends as far as the bottom of the container, and stands in the water contained in same without however said water level making direct contact with the soil contained in the upper sector.

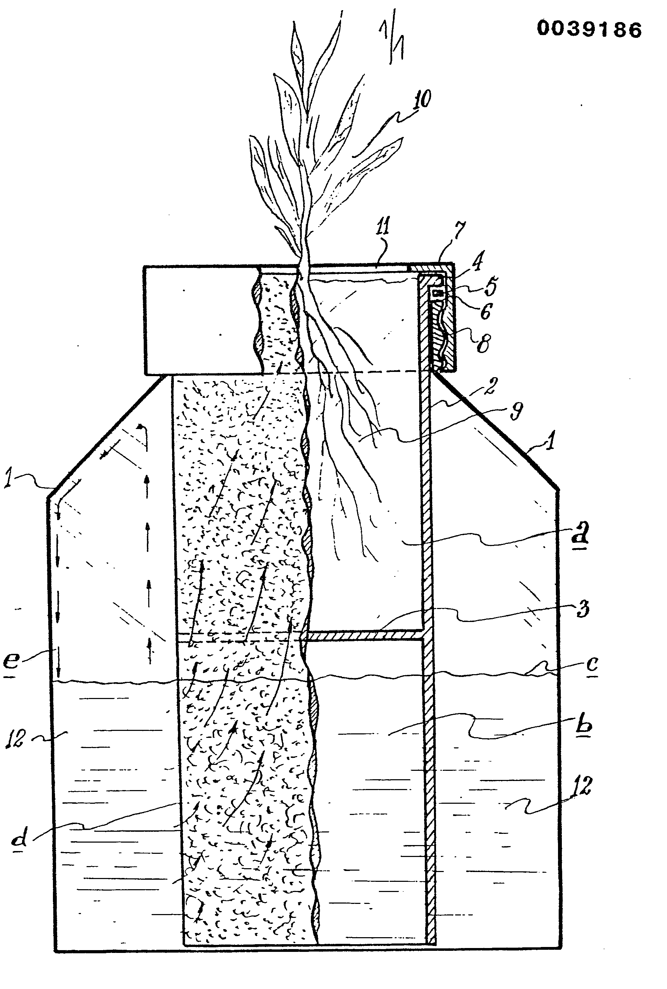

For a better understanding of the invention, the same will now be described in detail, by way of example only, with reference to the attached drawing in which a partially cutaway elevation view of a preferred embodiment is shown. In this preferred embodiment, again by way of example, the main container is made of a translucent material.

In said drawing, the container 1 can be seen housing in its interior the actual flowerpot 2 comprising a grid-like horizontal partition 3 dividing it into an upper sector a and a lower sector b. The material of the flowerpot is itself capable of capillary action.

At its upper rim, a lip 4 can be seen seated on the sealing ring 5 fitted to the rim 6 of container 1.

The screw top 7 fits into the thread 8 provided on container 1, whereby a leakproof seal of the pot to the container is achieved.

Sector a of flowerpot 2 contains the quantity of soil required and sufficient for the growth of roots 9 of plant 10 which plant passes through opening 11 provided in the top 7.

It will be seen that water 12 inside the container 1 is filled to a level c which is below that of the horizontal partition 3, while the arrows d illustrate the path travelled by the water absorbed by the porous walls of flowerpot 2, which absorption due to the principle of capillarity works in an upward direction so that upon reaching sector a of said flowerpot 2 the water makes humid the soil contained in said sector. Drainage is available through the grid-like partition 3.

The smaller arrows e illustrate the circulation of particles of water, separated from the liquid surface c by pressure differentials, migrate and, upon reaching the upper zones of container 1, under the influence of thermal differences, condense at the inner surface of said container 1 and eventually
fall in the shape of drops of water to the bottom
of the container.

Assessing the level to which the container
should be filled is readily carried out by
placing flowerpot 2 next to container 1, especially
if the container is transparent or translucent.

Flowerpot 2 will then be placed inside
container 1 with lip 4 abutting sealing ring 5 which
is on the rim of the container.

Thereafter, screw top 7 will be threaded and
fixed onto thread 8 provided on container 1, whereby
the whole assembly is rendered leakproof.

As will readily be understood, the lower sector
b of flowerpot 2 is rendered moist by water of the
body of water 12 which by virtue of capillarity
ascends within the walls of the pot and comes into
contact with the soil contained in the upper sector
a, where the roots 9 of plant 10 absorb such
quantities of water as are warranted for each
species, while excess water will continue its
migration to the surface of the soil and evaporate
into the atmosphere.

The result achieved with the aid of the novel
flowerpot assembly is that the soil will be kept
at a constant degree of humidity suited to the
requirements of the plant in question, because if
the plant due to its nature absorbs more water, the
capillary flow will be accelerated and if it absorbs
less water the capillary flow will be slowed down.

An unexpected feature of the invention is the
remarkable durability of the body of water initially
poured into container 1 which, depending on its
volume, can in certain cases consistently and
uniformly deliver and support the required degree of humidity during periods of up to several months.

The technical improvements provided by the present invention will be appreciated in practice by professional and amateur gardeners alike.

Having thus described the instant invention and the means to put same into practice, it is deemed unnecessary to go into further details as its advantages will readily be appreciated in daily use. However, I wish to state clearly that various modifications can be made in the invention without departing from its spirit and scope.

CLAIMS:

1.   A plant pot assembly with a plant pot (2) and a water reservoir (1) characterized in that the reservoir (1) and pot (2) are adapted together to form a closed water container, the pot (2) being divided longitudinally by a partition (3) into an upper sector (a) and a lower sector (b), the upper sector (a) being in use entirely above the level (c) of water (12) in the reservoir (1) and there being capillary means (d) for bringing water to the upper sector (a).

2.   A plant pot assembly according to claim 1 wherein the partition (3) has a grid structure.

3.   A plant pot assembly according to claim 1 or claim 2 wherein the water container has a plurality of said pots (2).

4.   A plant pot assembly according to any one of the preceding claims wherein the or a said plant pot is so constructed that the said capillary action may take place within its substance.

5.   A plant pot assembly according to any one of the preceding claims wherein there is provided means (4,5,7) to make a fluid-tight seal between the container (1) and the or each plant pot (2).

6.   A plant pot assembly according to claim 5 wherein there is a screw top (7) to urge a flange (4) of plant pot each against a sealing ring (5) between it and a rim (6) the container (1), so as to promote the said seal.

7.    A plant pot assembly according to  any one of the preceding claims wherein the or a said plant pot (2) comprises an open ended cylinder of a porous material, the partition (3) being located substantially half-way along its axial length.

**European Patent Office**

**EUROPEAN SEARCH REPORT**

EP 81 30 1710.0

## DOCUMENTS CONSIDERED TO·BE RELEVANT

| Category | Citation of document with indication, where appropriate, of relevant passages | Relevant to claim | CLASSIFICATION OF THE APPLICATION (Int. Cl.³) |
|---|---|---|---|
| | DE – A – 1 956 124 (G. ROSSKOPF)<br>* claim 3; page 1, lines 1 to 19; fig. 1, 2 *<br>-- | 1.-3 | A 01 G 27/00 |
| | AT – B – 320 333 (K. VAN BREEMEN)<br>* page 2, line 33 to page 3, line 30; fig. 1 to 3 *<br>-- | 1,3,4 | |
| | DE – A1 – 2 501 707 (J.B. GOLDSTAUB)<br>* fig. 1 to 3 *<br>& US – A – 3 898 766<br>-- | 3 | **TECHNICAL FIELDS SEARCHED** (Int. Cl.³) |
| A | US – A – 2 865 137 (R.S. LONGACRE)<br>* claim 1; fig. 1 *<br>---- | 1 | A 01 G 27/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 09–07–1981 | SCHOFER |